# EUROPEAN PATENT APPLICATION

(11) **EP 1 347 357 A2**
(43) Date of publication of application: **24.09.2003**
(21) Application number: 03005272.4
(22) Date of filing: 10.03.2003
(51) Int. Cl.: G06F 1/16

(54) **Electronic device**

(30) Priority: 11.03.2002 JP 2002065904
(71) Applicant: Sharp Kabushiki Kaisha, Osaka-shi, Osaka 545-8522 (JP)
(72) Inventor: Hirano, Yoshiaki, Sakurai-shi, Nara 633-0004 (JP); Kurohara, Takashi, Kitakatsuragi-gun, Nara 639-0214 (JP); Hirano, Tatsuya, Yamatokoriyama-shi, Nara 639-1103 (JP)
(74) Representative: Müller - Hoffmann & Partner

(57) **Abstract**

An electronic equipment comprises a device body 1 having a first input unit 3, and a second key input unit 4 slidably attached to the device body 1 and capable of covering and exposing the first input unit 3 by sliding movement. The second key input unit 4 is connected by a FPC to a circuit in a circuit board disposed on the device body 1. Key input can be carried out by both the first input unit 3 and the second key input unit 4. As for the second key input unit 4, it enables key input at any slide position which ranges from the first position for covering the first input unit 3 and the second position for entirely exposing the first input unit 3. The exterior of the second key input unit 4 is constituted by a cabinet 51 and key tops 52a both of which have inclined top surfaces.

## Description

### BACKGROUND OF THE INVENTION

### Field of the Invention

The present invention relates to electronic devices such as personal computers, PDAs and mobile communication equipment, and more particularly relates to electronic devices whose device body is equipped with a slidable keyboard housing and which enables key input while the keyboard housing is slid open.

### Prior Art

With respect to the input device in conventional electronic devices, particularly in compact electronic devices, the stylus-based input system is dominant. In general, a user inputs information into this type of electronic device by using an accompanying stylus and the like, which is used to handwrite characters on a liquid crystal display (LCD), etc., or to tap a software keyboard displayed on the LCD.

Now that personal computers are widely used among the public, users accustomed to a hard key-type keyboard (hereinafter called "hardware keyboard") come up with requests for a compact electronic device equipped with a hardware keyboard to which they are accustomed. For such users, optional input devices, including a hardware keyboard to be cable-connected to an electronic device, are available.

Besides, some compact electronic devices incorporate a hardware keyboard unit into the device body in order to facilitate input on a hardware keyboard.

In addition, regardless of the size of the electric device, various attempts have been made in order to mount an input device on the electronic device. For example, Examined Japanese Utility Model Publication No. H7-21016 discloses a remote controller whose body has a mode switchover panel which can be opened and closed freely. In response to opening and closure of the mode switchover panel, the input mode is changed over to enable either of its keyboards which adopt different key configurations from one another.

As for the input device disclosed in Japanese Utility Model Laid-open Publication No. H5-40926, the housing of an electronic device is equipped with a hardware keyboard and an additional tablet input device which can be pulled out of the housing. The tablet input device is adapted to both the stylus input mode and the virtual keyboard input mode.

Japanese Patent Laid-open Publication No. H5-313799 discloses a personal computer equipped with a built-in tablet. While a desktop PC or the like has a hardware keyboard, its numeric key unit is stored in the housing and designed to be slidable in and out of the housing.

Furthermore, in a certain type of PDAs, a hardware keyboard is hidden under a sliding keyboard. When the sliding keyboard is slid open, the hardware keyboard is exposed and enables key input. This hardware keyboard has the same key layout as a PC keyboard.

This type of electronic device is briefly discussed with reference to Fig. 22 to Fig. 24 which illustrate the structure of a hardware keyboard on the device body side and a sliding keyboard on the slide unit side. Fig. 22 is an external perspective view. Fig. 23 illustrates the reverse side of the electronic device, showing a device body 210 together with a sliding keyboard 201 on the slide unit which is in the open state. Fig. 24 is a sectional view, with the sliding keyboard 201 in the closed state.

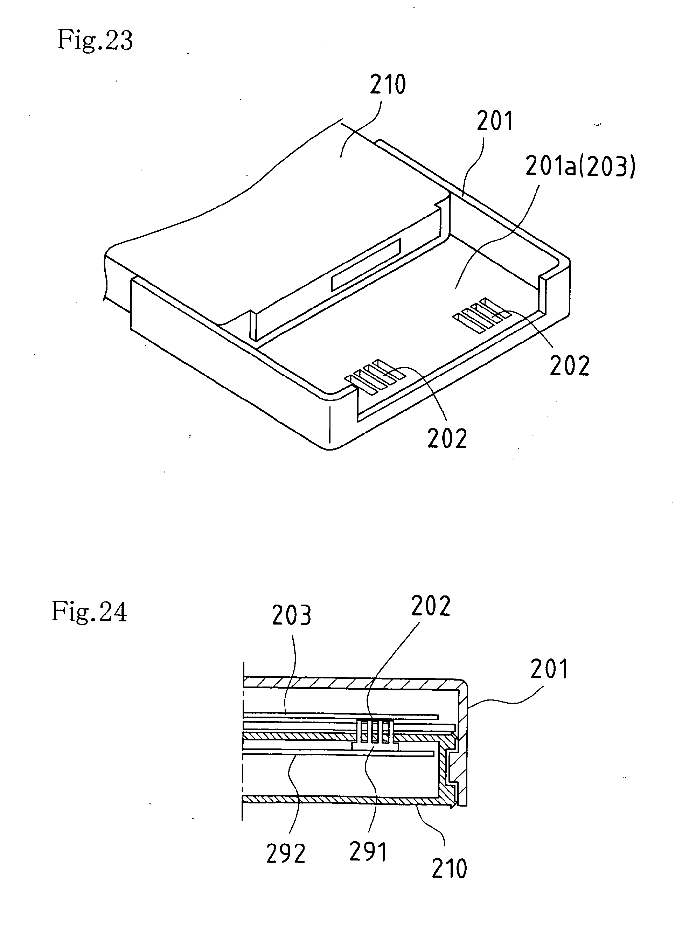

As shown in Fig. 23, while the sliding keyboard 201 is open, a pair of electric contacts 202 mounted on a slide unit-side PWB 203 are exposed on the reverse surface 201a of the sliding keyboard 201. When the sliding keyboard 201 is closed, these slide unit-side contacts 202 come into contact with a pair of contacts 291 (see Fig. 24) provided on the front surface of the device body 210. Electrical signals are sent and received by way of these contacts 202, 291.

Although not shown, another pair of contacts are mounted on the reverse surface 201a of the sliding keyboard 201. When the sliding keyboard 201 is open, these contacts touch the contacts 291 provided on the front surface of the device body 210.

Turning to Fig. 24, the device body 210 contains a device body-side PWB 292 for transmitting electrical signals from the keyboard. The device body-side contacts 291 are mounted on this device body-side PWB 292. The device body-side contacts 291 exhibit a spring-like property and transmit electric signals by pushing conductive parts (not shown) on the PWB 292 by the spring-like property. In the state shown in Fig. 24, the device body-side contacts 291 which exhibit a spring-like property are pressed against the slide unit-side contacts 202 on the PWB 203 which locates in the sliding keyboard 201 of the sliding unit. By way of these contacts 202, 291, electric signals are transmitted from the device body-side PWB 292 to the slide unit-side PWB 203.

As mentioned above, many modifications have been made to diversify extended input devices. Nevertheless, none of them is satisfactory in giving sufficient input capabilities to palmtop-type compact electronic devices.

Besides, now that personal computers are widely used among the public, PDAs are desired to have the same input keys as personal computers. However, if a PDA includes not only its own multifunctional keys but also the same number of keys as personal computers, the PDA needs a key input area of considerable size as well as a display area. Taking the two requirements into consideration, it is inevitable to enlarge the device body. Eventually, for production of a compact PDA equipped with an easy-to-use hardware keyboard, the PDA requires a large area to accommodate the hardware keyboard, and has to increase its overall size in proportion to the keyboard area.

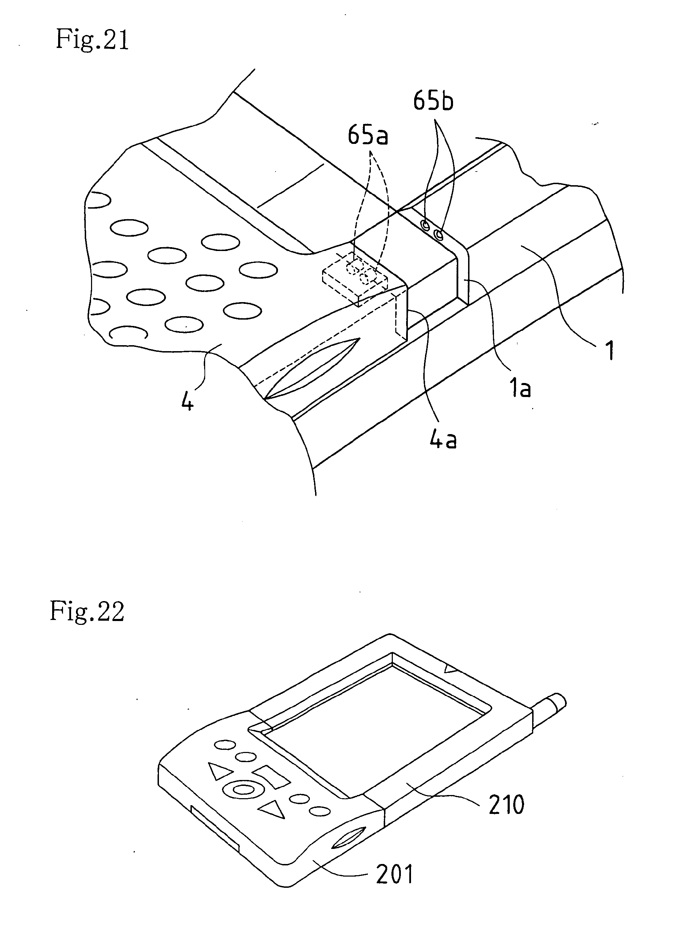

Regarding the PDA illustrated in Fig. 22 to Fig. 24, the sliding keyboard 201 is operated easily in comparison with other keyboards for compact electronic devices. This sliding keyboard 201 is actually reduced in size, but still occupies a large area. In this PDA, when the sliding keyboard 201 is slid open, a full keyboard on the device body 210 is exposed for key input. To put it another way, in order to make input on this full keyboard, the sliding keyboard 201 needs to be displaced in a sliding manner. This long-distance sliding movement restricts the arrangement of electrical connections.

To cope with this problem, the above-mentioned PDA is provided with two pairs of contacts at separate locations. On closure of the sliding keyboard 201, a first pair of contacts 202 touch the device body-side contacts 291 on the device body 210. On opening of the sliding keyboard 201, a second pair of contacts touch these device body-side contacts 291 on the device body 210.

However, with an increase of the slide distance, the sliding keyboard 201 which is a separate housing projects widely from the device body 210. Therefore, once the sliding keyboard 201 is open, the first pair of contacts 202 are exposed beyond the device body 210 (see Fig. 23) because they are arranged to touch the device body-side contacts 291 on the device body 210 when the sliding keyboard 201 is closed. As a result, this PDA is deficient in electrical reliability.

### SUMMARY OF THE INVENTION

An object of the present invention is to solve the above-mentioned problems and to provide an electronic device in which an input device is made of a separate housing and slidable relative to the device body and in which key input can be carried out while the slidable input device locates at any position.

An electronic device of the present invention comprises a device body having a first input unit, and a second input unit slidably attached to the device body and capable of covering and exposing the first input unit by sliding movement, wherein the second input unit enables key input at any slide position which ranges from a first position for covering the first input unit to a second position for entirely exposing the first input unit.

The electronic device of the present invention enables key input irrespective of the position of the slidable second input unit, thereby improving operability. In addition, this electronic device can prevent failures by establishing constant connection between the device body and the second input unit.

As the manner of connecting the second input unit and the circuit in the circuit board disposed on the device body, wired connection by a FPC and wireless connection via IR communication are both available.

Regarding the electronic device of the present invention, the second input unit is equipped with, as an exterior component thereof, a cabinet which has an inclined top surface. This second input unit may be a full keyboard which includes alphabet keys. Key tops disposed in the second input unit may also have inclined top surfaces.

In the case of a PDA (as the electronic device according to the present invention), a user makes key input, with holding the PDA in his hands. Considering this situation, the cabinet and the key tops with inclined top surfaces can be arranged to optimize key operations in accordance with user's thumb/finger positions.

In the electronic device of the present invention, the second input unit is equipped with key tops which are shaped differently at exterior portions thereof and which are categorized into groups according to shapes. With the key tops being designed in different shapes at the exterior portions, a user can easily identify the input keys at a glance, in making key input on a full keyboard. This arrangement not only improves operability but also prevents input mistakes.

The electronic device of the present invention is further featured in that the second input unit is equipped with key tops which are categorized into groups, and the cabinet is provided with means for distinguishing each key top group from the other group or groups. Specifically speaking, the key tops provided in the second input unit are categorized by a groove, a ridge or a printed mark which is formed in or on the cabinet in order to link key tops of the same groups.

The groove, ridge or printed mark indicates that the input keys are categorized on a full keyboard, and helps a user in an apparent way to decide which key to press. This arrangement not only improves operability but also prevents input mistakes.

Also, the electronic device of the present invention is characterized in that the device body is formed with an elongated guide slot which penetrates a top surface of the device body and which extends along a slide direction of the second input unit; the second input unit has a slider which is fixed on a bottom surface of the second input unit and allowed to slide in the elongated slot; and the second input unit is arranged to be slidable between the first position and the second position, in cooperation with the slider which slides in the elongated slot.

According to the thus featured present invention, a plurality of sliders may be fixed on the second input unit and allowed to slide in closed elongated slots formed in the device body. This structure not only increases the resistance to pressure load imposed on the second input unit, but also ensures stable slide actions (sliding movement).

In this electronic device, the elongated slot is open at a rear end thereof and merges into an opening formed in a rear end wall of the device body, and the slider is arranged to project rearwardly from the opening in the rear end wall when the second input unit slides to the second position. By arranging the slider to project in this manner, the slide distance of the second input unit can be extended by the length of projection.

This slider has a stopper at the center of a bottom surface thereof, the stopper being brought into locking engagement with a periphery of the opening formed in the rear end wall when the second input unit slides to the second position. This arrangement can reliably prevent the second input unit from coming off from the device body.

Further, the electronic device of the present invention is characterized in that the device body is arranged to have a pair of outward projections, one each on a pair of external surfaces of the device body which are opposed to each other in a direction orthogonal to the slide direction of the second input unit; and the second input unit is provided with a pair of first engagement recesses and a pair of second engagement recesses, one each in a pair of internal surfaces of the second input unit which are opposed to each other in a direction orthogonal to the slide direction of the second input unit, the first and second engagement recesses in each internal surface being spaced along the slide direction at a predetermined interval. With the second input unit locating at the first position for covering the first input unit, the pair of projections engage in the pair of first engagement recesses, and with the second input unit locating at the second position for entirely exposing the first input unit, the pair of projections engage in the pair of second engagement recesses.

The slidable second input unit is closed while the first input unit is not in use, and opened in use. With the above arrangement, the second input unit can be locked (fixed) at either position under a certain load. As a result, while the first input unit is not in use, this locking arrangement prevents accidental opening of the second input unit and thereby protects the display unit and the like from damage. Besides, while the first input unit is in use, the second input unit is fixed at the open position and does not interfere with input operation.

Furthermore, the electronic device of the present invention is characterized in that the device body is provided with a pair of openings, one each through a pair of side walls of the device body which are opposed to each other in a direction orthogonal to the slide direction; and the device body accommodates a pair of keylock bodies, one each along internal surfaces of the pair of side walls, each of the keylock bodies having a locking projection which protrudes outwardly from one of the openings. With locking projections of the pair of keylock bodies abutting on the internal surfaces of the second input unit except for the first and second engagement recesses, the keylock bodies deform elastically in such a manner that the locking projections are pushed into the device body by the internal surfaces.

In practice, the second input unit can be locked in a reliable, backlash-free manner if a plurality of keylock bodies are separately disposed as far as possible from each other. Bearing this in mind, the present invention disposes two keylock bodies, one each at the pair of side walls of the device body, and thereby realizes reliable, backlash-free locking actions. Moreover, the present invention utilizes keylock bodies of the same shape which can be reversibly placed on either side of the device body. Use of reversible keylock bodies is effective in saving the cost for dies and decreasing the number of parts.

In the electronic device of the present invention, the second input unit is provided with a pair of clearance recesses between the first and second engagement recesses, the clearance recesses preventing the locking projections from touching the internal surfaces of the second input unit. Owing to the presence of a pair of clearance recesses between the first and second engagement recesses, the locking projections of the keylock bodies do not touch the internal side surfaces of the second input unit while the second input unit is sliding from the first position (where the locking projections of the keylock bodies engage in the first engagement recesses) to the second position (where the locking projections of the keylock bodies engage in the second engagement recesses). As a result, the second input unit can slide smoothly under no load in the midst of the sliding movement.

### BRIEF DESCRIPTION OF THE DRAWINGS

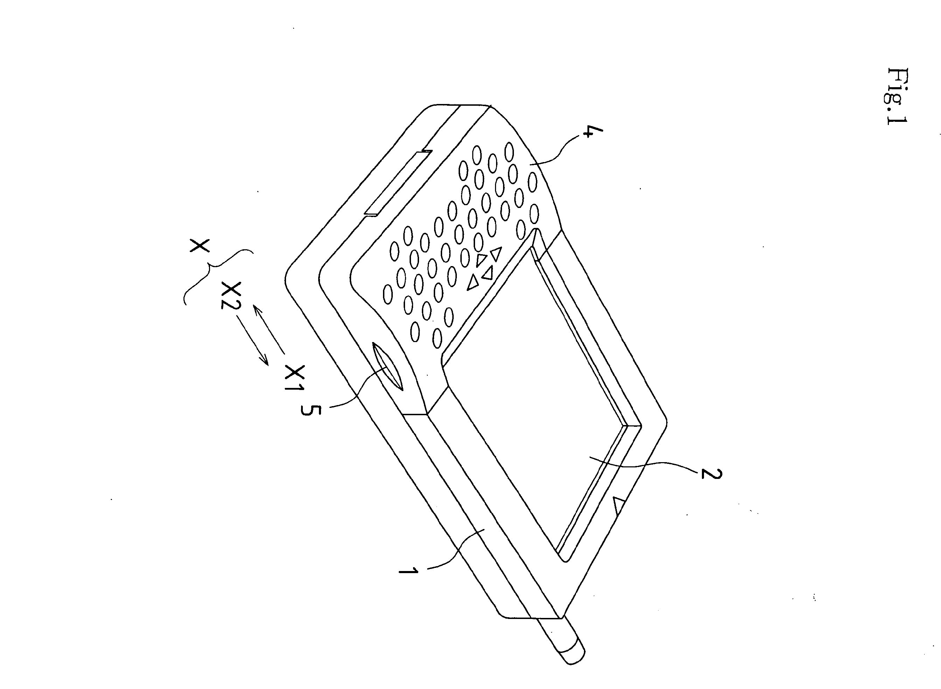

Fig. 1 is an external perspective view of a PDA which is an electronic device according to the present embodiment, with the first input unit 3 being covered by the second key input unit 4.

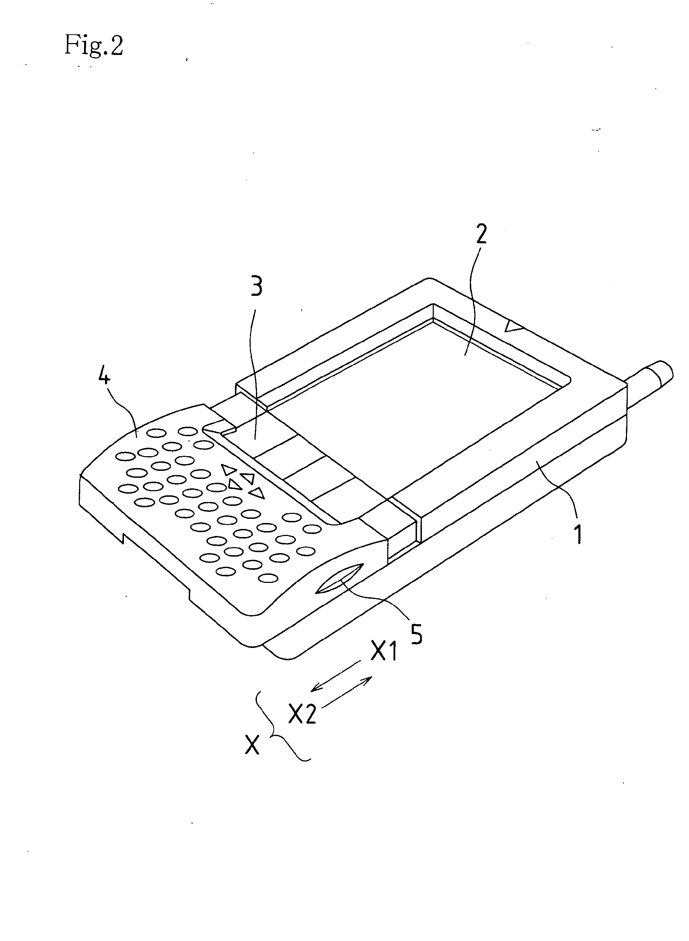

Fig. 2 is an external perspective view of a PDA which is an electronic device according to the present embodiment, with the first input part 3 being exposed entirely.

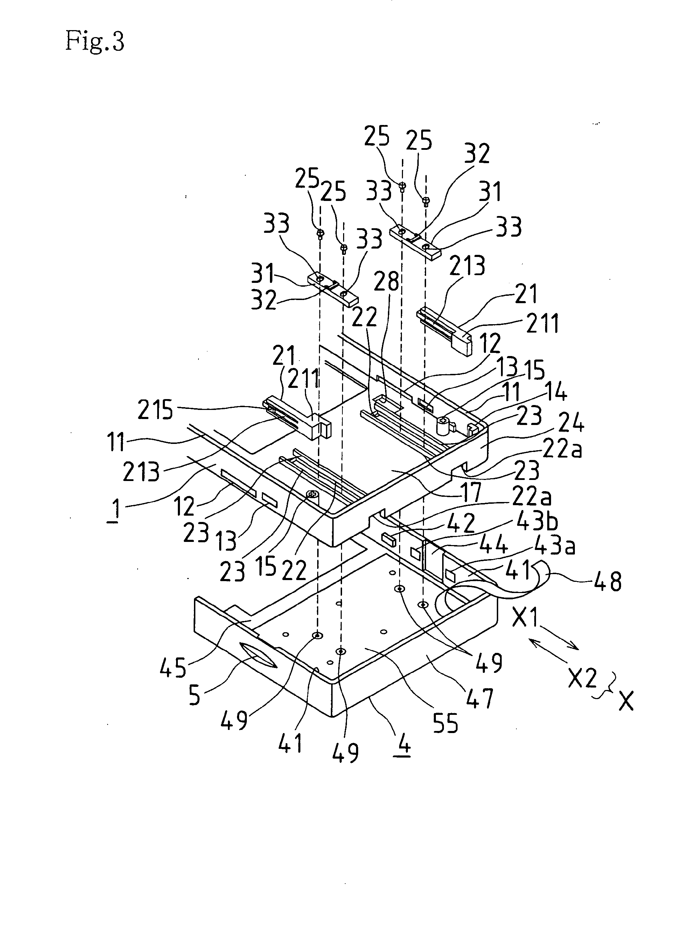

Fig. 3 is an exploded perspective view showing main parts which constitute the slide structure for the second key input unit 4.

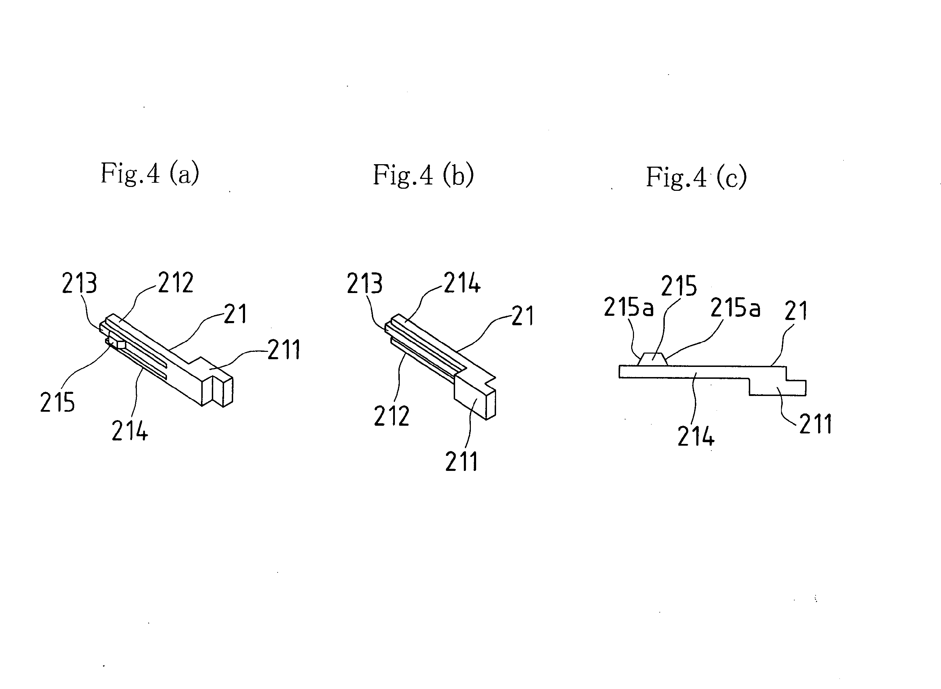

Fig. 4(a) and Fig. 4(b) are perspective views of a keylock body, and Fig. 4(c) is a plan view thereof.

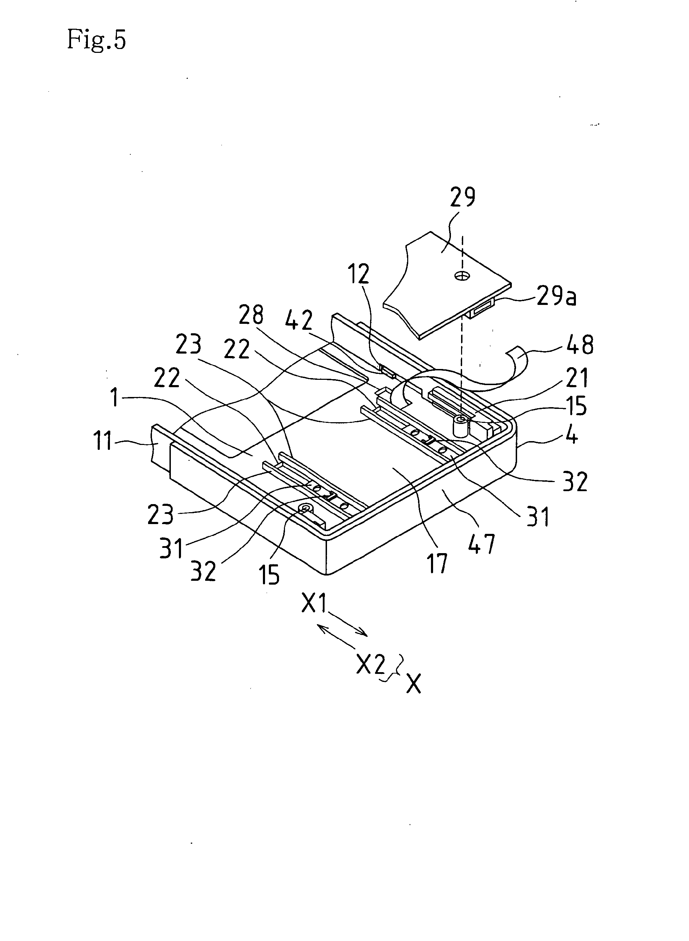

Fig. 5 is a perspective view which shows an essential part of the PDA as seen from the reverse side of the device body, for illustrating travel of the sliders along with sliding movement of the second key input unit.

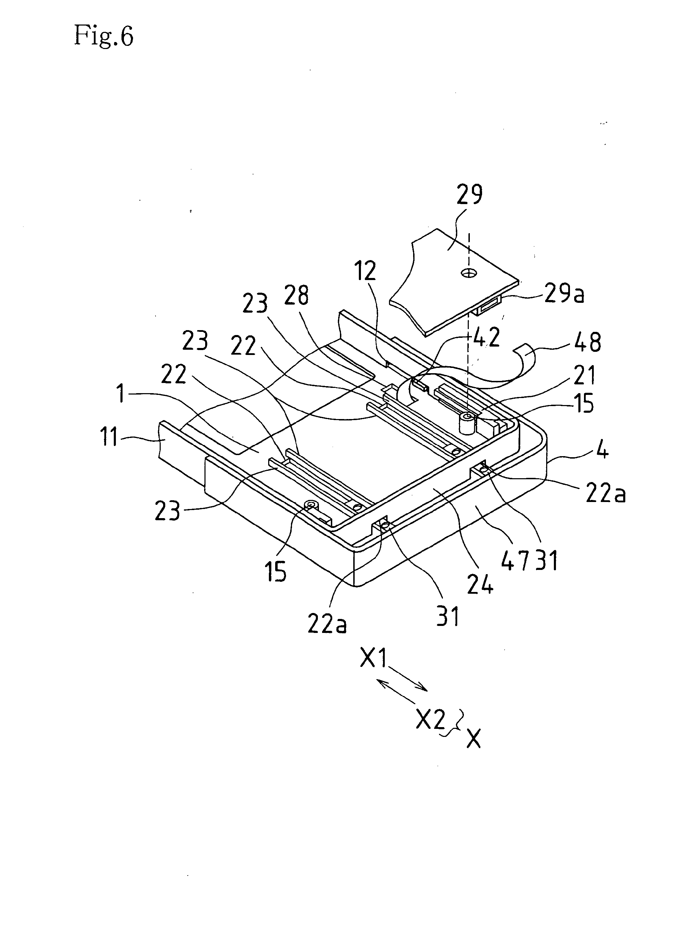

Fig. 6 is a perspective view which shows an essential part of the PDA as seen from the reverse side of the device body, for illustrating travel of the sliders along with sliding movement of the second key input unit.

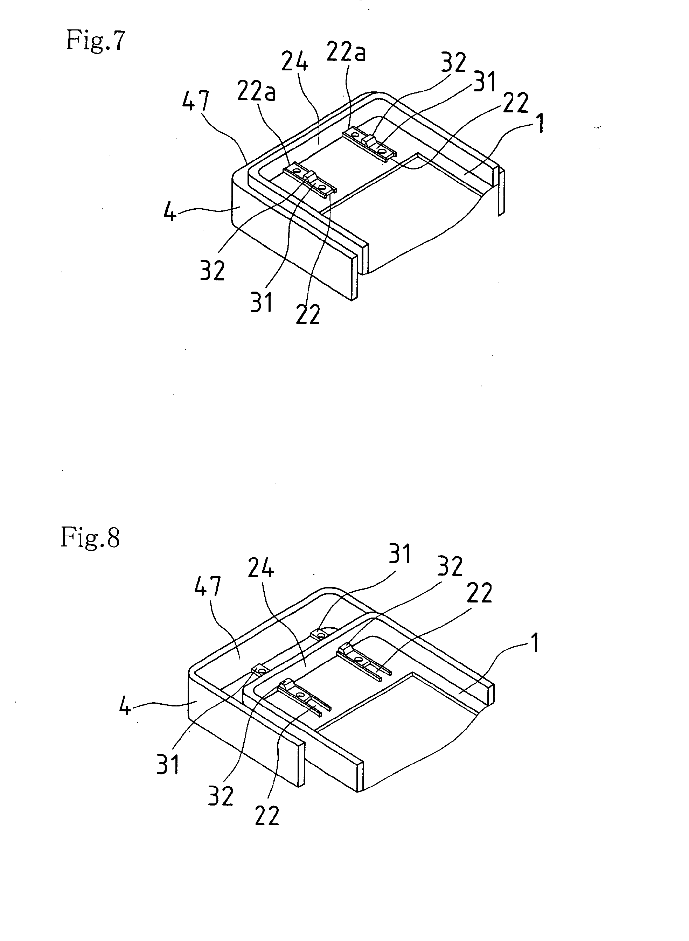

Fig. 7 is a perspective view which shows an essential part of the PDA as seen from the reverse side of the device body, for illustrating travel of the sliders along with sliding movement of the second key input unit.
Fig. 8 is a perspective view which shows an essential part of the PDA as seen from the reverse side 5 of the device body, for illustrating travel of the sliders along with sliding movement of the second key input unit.

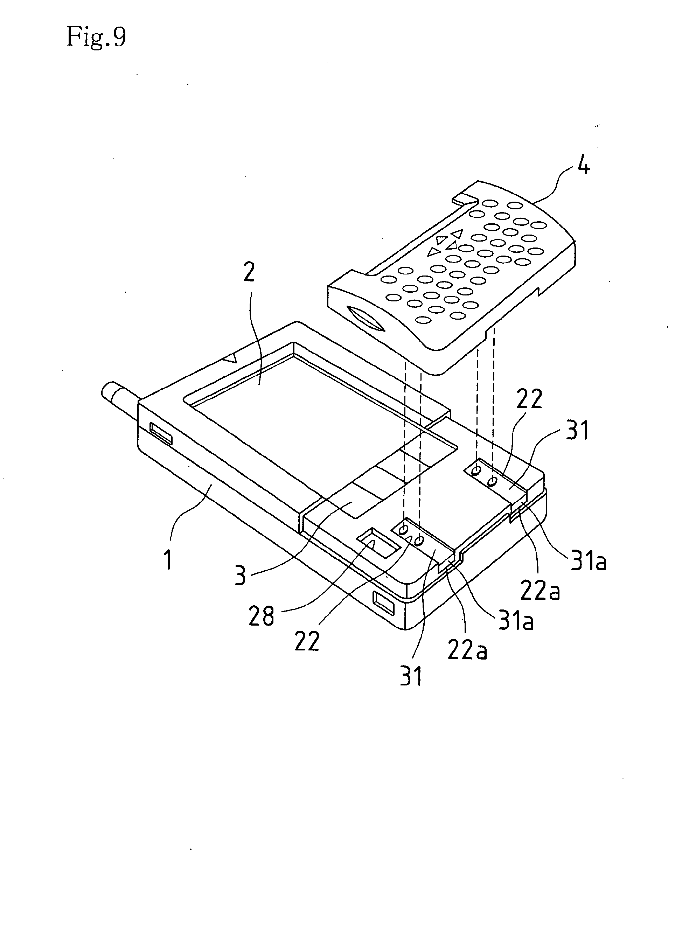

Fig. 9 is a perspective view of the PDA as seen from the front side of the device body, with the second 0 key input unit and the sliders being separated'from each other, for illustrating travel of the sliders along with sliding movement of the second key input unit.

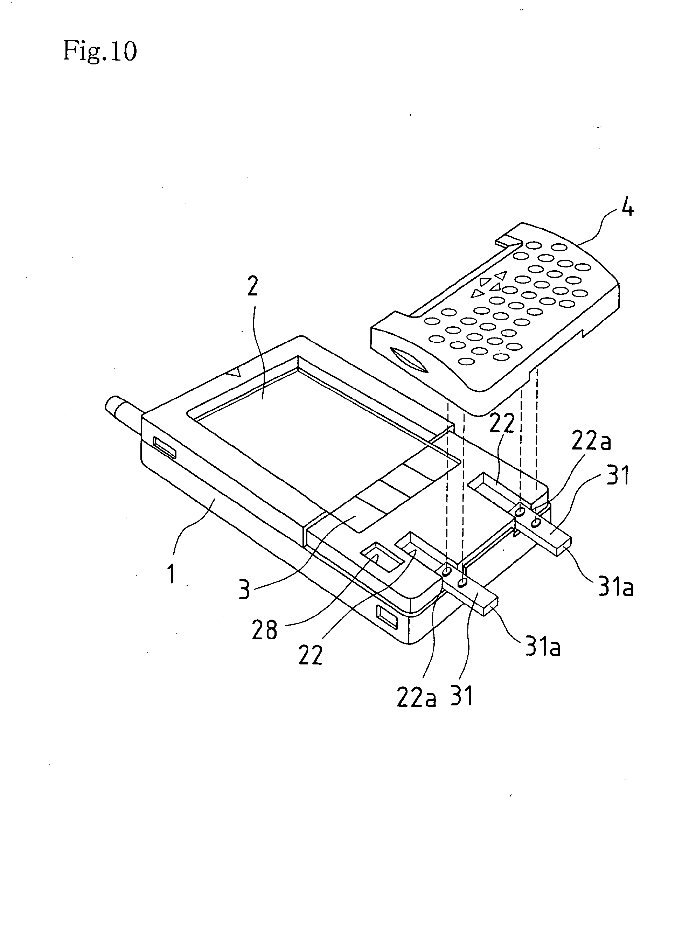

Fig. 10 is a perspective view of the PDA as seen from the front side of the device body, with the second key input unit and the sliders being separated from each other, for illustrating travel of the sliders along with sliding movement of the second key input unit.

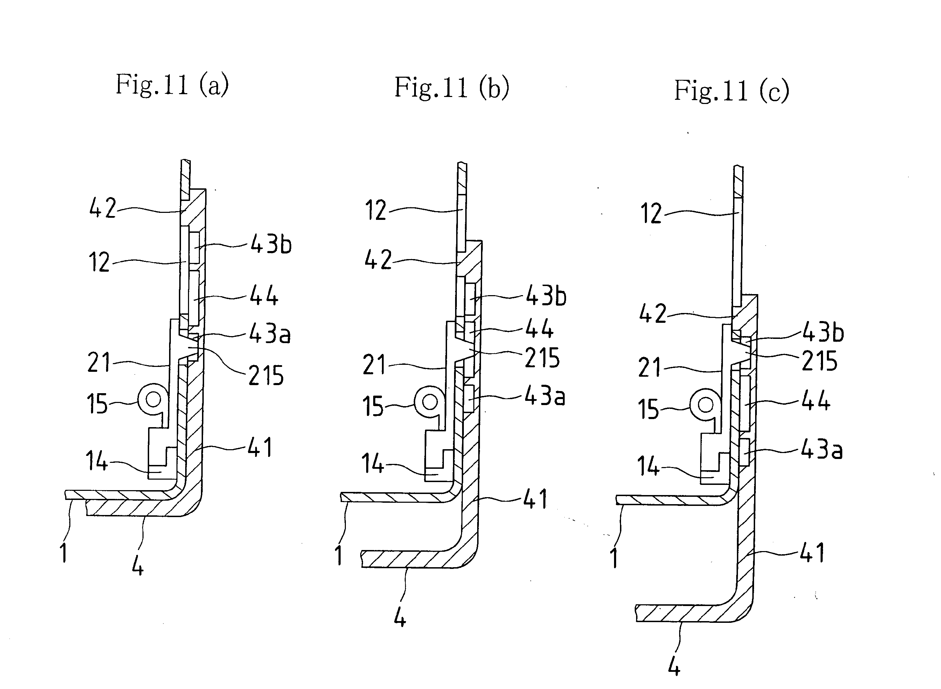

Figs. 11(a)-(c) are enlarged horizontal sectional views which show the essential part of the slide structure, with the slidable guide projections of the second key input unit being fitted into the guide slots in the device body. The second key input unit is at the first position in Fig. 11(a), is in the midst of sliding movement from the first position to the second position in Fig. 11(b), and is at the second position in Fig. 11(c).

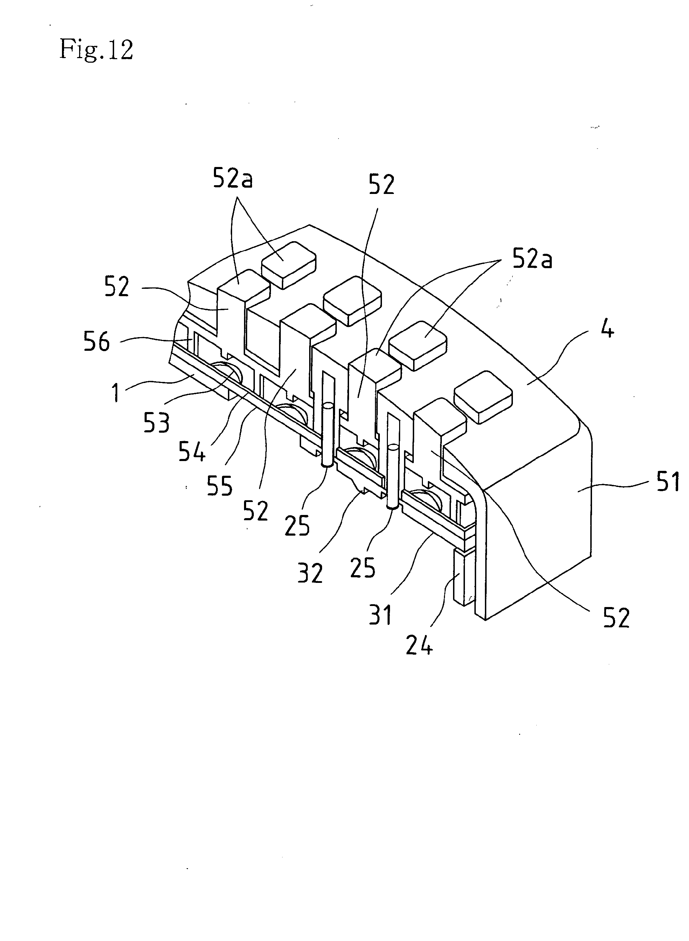

Fig. 12 is a vertical sectional view showing an essential part of the PDA, in which the second key input unit 4 attached to the device body is in the closed state.

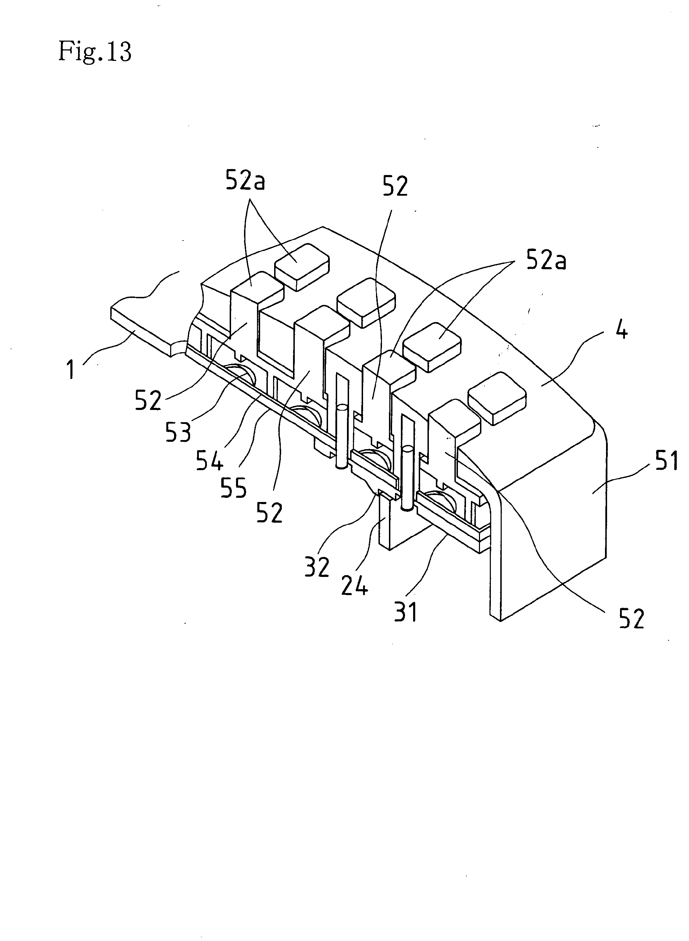

Fig. 13 is a vertical sectional view showing an essential part of the PDA, in which the second key input unit 4 attached to the device body is in the open state.

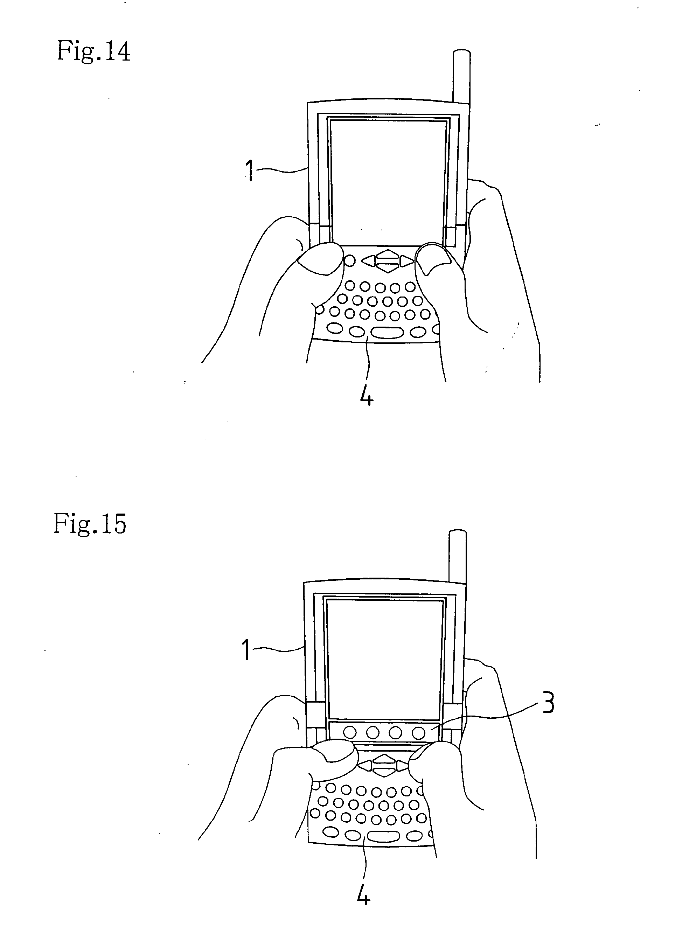

Fig. 14 is a plan view of the PDA which illustrate a key input operation, with the second key input unit 4 being closed.
Fig. 15 is a plan view of the PDA which illustrate a key input operation, with the second key input unit 4 being open.

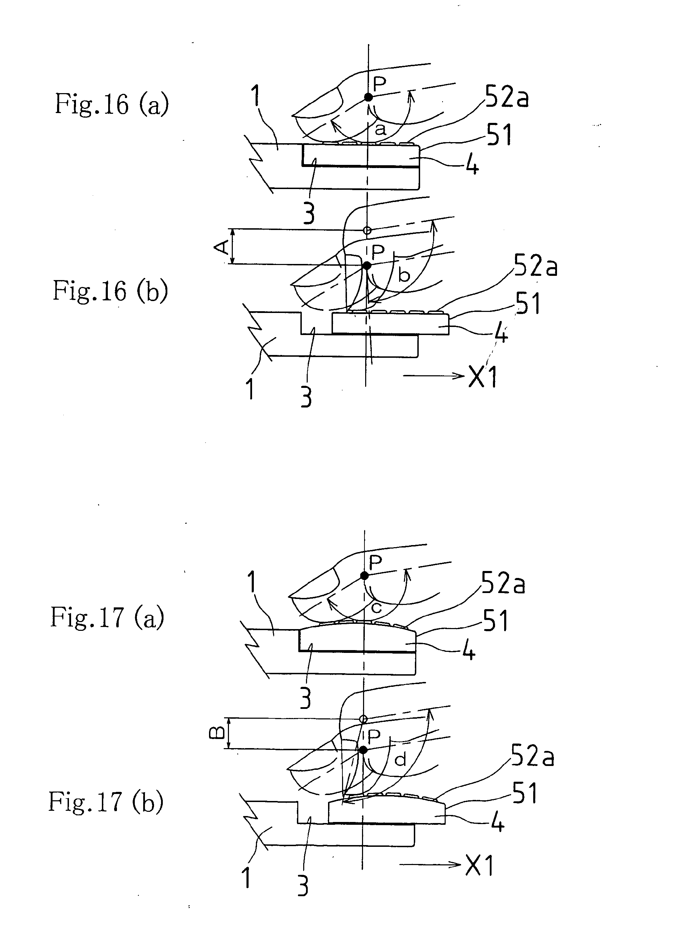

Fig. 16 details the shift of thumb positions in connection with sliding movement of a second key input unit according to a conventional device. The second key input unit 4 is closed in Fig. 16(a) and is open in Fig. 16(b).
Fig. 17 details the shift of thumb positions in connection with sliding movement of the second key input unit according to the present invention. The second key input unit 4 is closed in Fig. 17(a) and is open in Fig. 17(b).

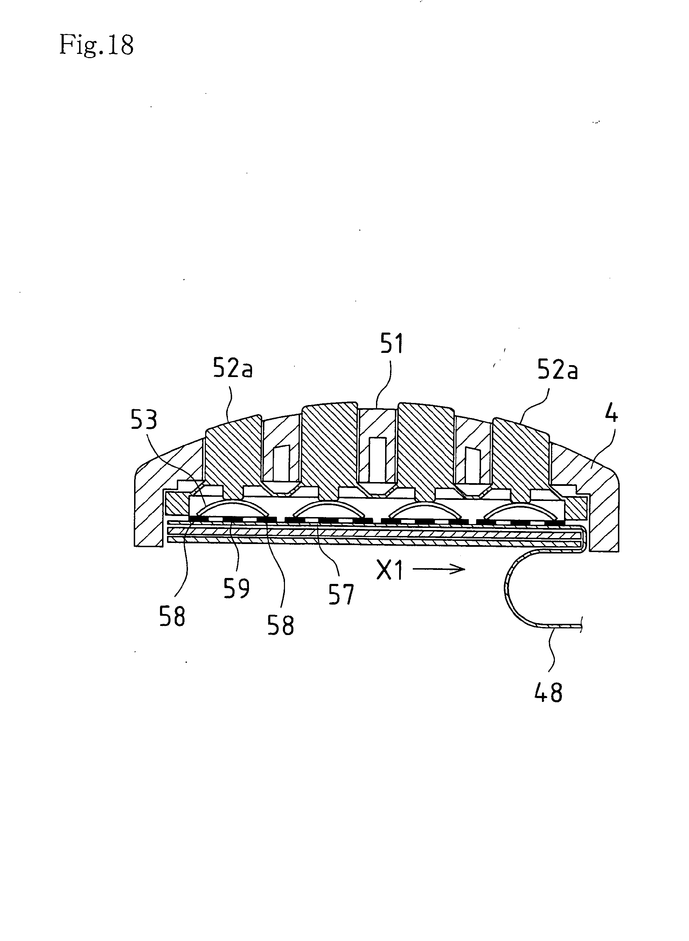

Fig. 18 is a schematic sectional view of the second key input unit shown in Fig. 17.

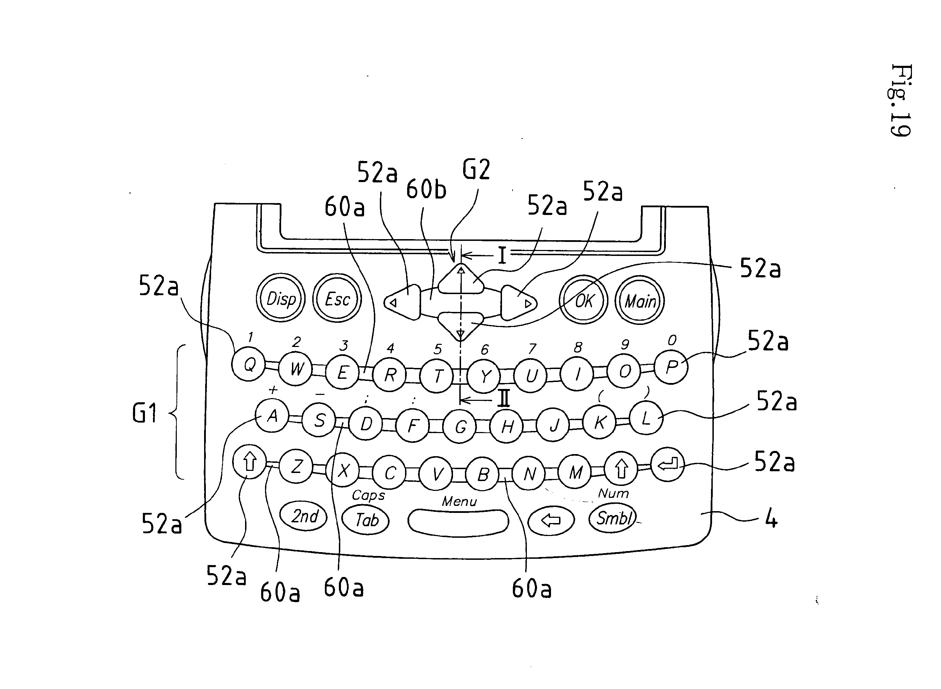

Fig. 19 is a plan view of the second key input unit.

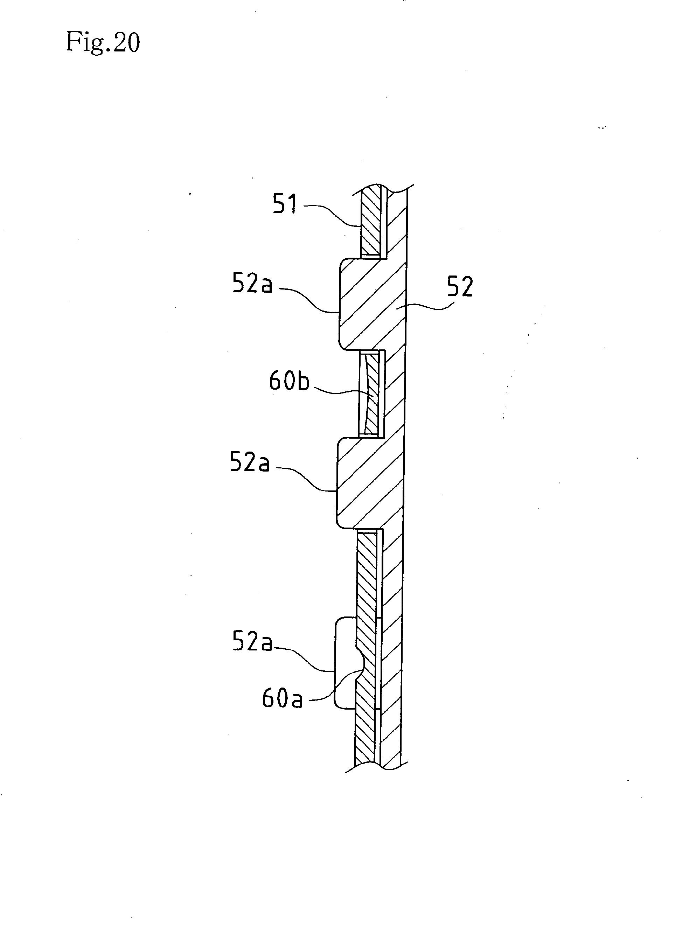

Fig. 20 is a sectional view taken along the line I-II in Fig. 19.
Fig. 21 is a partial enlarged perspective view showing an additional example for providing electrical connections between the second key input unit and the circuit in the circuit board.
Fig. 22 is an external view of a conventional PDA, showing the structure of a hardware keyboard on the device body side and a sliding keyboard on the slide unit side.
Fig. 23 is a perspective view which shows an essential part of a conventional PDA as seen from the reverse side of the device body, with the sliding keyboard on the slide unit being open.
Fig. 24 is a sectional view of a conventional PDA, with the sliding keyboard being closed.

### DESCRIPTION OF THE PREFERRED EMBODIMENTS

An embodiment of the present invention is hereinafter described with reference to the accompanying drawings.

Fig. 1 and Fig. 2 are external perspective views of a PDA which is an electronic device according to the present embodiment.

The PDA of this embodiment is composed of a device body 1 having a display unit 2 (e.g. a liquid crystal display) and a first input unit 3, and a second key input unit 4 which is slidably attached to the device body 1. For the purpose of assisting a user to slide the second key input unit 4, antislip protrusions 5, 5 are provided at the left and right external side surfaces of the second key input unit 4 (only the nearer protrusion is visible in Fig. 1 and Fig. 2). A user can put his thumb and/or fingers on these antislip protrusions 5, 5 in order to grip and slide the second key input unit 4 from both sides.

The second key input unit 4 is attached to the device body 1 and capable of sliding in the directions of the arrows X (X1, X2). This second key input unit 4 is slidable between the first position for covering the first input unit 3 (as shown in Fig. 1) and the second position for entirely exposing the first input unit 3 (as shown in Fig. 2).

When the second key input unit 4 is open and the first input unit 3 is exposed, this PDA presents an additional key input area and supports input operation by a user. With respect to the input system of the first input unit 3, it may adopt key input as with the second key input unit 4 or may adopt tablet input using a stylus or the like.

Fig. 3 is an exploded perspective view showing main parts which constitute the slide structure for the second key input unit 4, as seen from the reverse side of the device body 1.

Firstly, the structure of the second key input unit 4 is detailed. From the viewpoint of clarity, the following description about its left and right internal surfaces 41, 41 is understood to focus on one of them (i.e. the right internal surface 41 in Fig. 3), unless otherwise specified. A slidable guide projection 42 serves to determine the basic directions for the second key input unit 4 to slide relative to the device body 1 by optimum backlash-free actions. Rearwardly of this slidable guide projection 42, a first keylock engagement hole 43a and a second keylock engagement hole 43b are formed along the slide directions X at a predetermined interval (to be specific, this interval defines the slidable distance of the second key input unit 4). The first and second keylock engagement holes 43a, 43b serve to lock the second key input unit 4 at the first position and the second position as defined above. Between the first keylock engagement hole 43a and the second keylock engagement hole 43b, a clearance recess 44 is formed in order that a locking projection 215 on a keylock body 21 (to be described later) does not touch the internal side surface 41.

The reverse surface 45 of the second key input unit 4 locates face to face with the device body 1 and holds a base circuit board 55 for key contacts. Where necessary, an insulating sheet (not shown) may be attached on this base circuit board 55 for key contacts. Since the insulating sheet can prohibit electrical contact with the device body 1 without fail, it is possible to protect the device body 1 from failures due to static electricity or the like.

At the rear end 47 of the second key input unit 4, a FPC 48 is inwardly drawn out of the base circuit board 55 for key contacts and serves to provide electrical connections with a circuit in a circuit board 29 disposed on the device body 1 (see Fig. 5).

Secondly, the structure of the device body 1 is detailed. From the viewpoint of clarity, the following description about its left and right side walls 11, 11 is understood to focus on one of them (i.e. the right side wall 11 in Fig. 3), unless otherwise specified. The side wall 11 includes a guide slot 12 for slidable engagement with the slidable guide projection 42 of the second key input unit 4. The guide slot 12 has a prescribed length along the slide directions X (to be specific, this slot needs to permit the slidable guide projection 42 to slide as long as the slidable distance of the second key input unit 4). Rearwardly of the guide slot 12 (to the rear end of the device body 1), there is an opening 13 through which the locking projection 215 of the keylock body 21 is exposed (allowed to project) to the outside.

Each keylock body 21 is made of thermoplastic resins (such as polyacetal resins) which exhibit a spring-like property. As shown in Fig. 4, the keylock body 21 is composed of a head 211 and three legs 212, 213, 214 which extend from the head. When the keylock body 21 is installed at each side wall 11 of the device body 1, the top leg 212 and the bottom leg 214 rest against the side wall 11 and serve as support members for stably fixing the keylock body 21. The middle leg 213 is an elastically deformable action member and has a locking projection 215 on its outward-facing surface. The locking projection 215, which appears trapezoidal in plan view (see Fig. 4(c)), is composed of slopes 215a, 215a on both sides. As for the head 211, it is shaped to fit with a head rest 14 which is disposed at each side wall 11 of the device body 1.

In the vicinity of each side wall 11, the device body 1 is provided with a boss 15 for screwing the circuit board 29 (see Fig. 5). In a clearance defined between the boss 15 and the side wall 11, the legs 212-214 of the keylock body 21 are squeezed. Eventually, as shown in Fig. 5 and Fig. 6, the keylock body 21 is positioned in place by the boss 15, the head rest 14 and the side wall 11, and fixed on the device body 1. In the fixed state, the locking projection 215 on the middle leg 213 projects outwardly from the opening 13 which penetrates the side wall 11 of the device body 1.

In the present embodiment, two keylock bodies 21 are fixed one each at the left and right side walls 11, 11 of the device body 1. These keylock bodies 21 are designed in the same shape and capable of fitting in both positions reversibly. As a result, the present embodiment can be realized with a fewer parts and at a lower cost for dies and the like.

Once the two keylock bodies 21 are fixed on the side walls 11, 11 of the device body 1, the second key input unit 4 is attached to the device body 1. To be specific, the slidable guide projections 42, 42 on the left and right internal side surfaces 41, 41 are fitted into the guide slots 12, 12 in the side walls 11, 11 of the device body 1. In this manner, the second key input unit 4 is attached to the device body 1 and made slidable in the slide directions X.

Figs. 11(a)-(c) are enlarged horizontal sectional views which show the essential part of the slide structure, with the slidable guide projections 42 of the second key input unit 4 being fitted into the guide slots 12 in the device body 1.

Referring first to Fig. 11(a), when the second key input unit 4 locates at the first position and covers the first input unit 3 (as shown in Fig. 1), the locking projection 215 of the keylock body 21 is engaged in the first keylock engagement hole 43a formed in the second key input unit 4. Turning to Fig. 11(c), when the second key input unit 4 locates at the second position and exposes the first input unit 3 entirely (as shown in Fig. 2), the locking projection 215 of the keylock body 21 is engaged in the second keylock engagement hole 43b formed in the second key input unit 4.

Referring back to Fig. 11(b), while the second key input unit 4 is sliding from the first position to the second position (or from the second position to the first position), the locking projection 215 of the keylock body 21 is engaged in the clearance recess 44. Since neither locking projection 215 of the two keylock bodies 21 touches the internal surfaces 41 of the second key input unit 4 during this sliding movement, the second key input unit 4 can slide smoothly under no load in the midst of the sliding movement. Fig. 11(b) also represents the case where the second key input unit 4 is stopped halfway of its sliding movement. Even in this situation, the middle leg 213 of each keylock body 21 does not lose its spring-like property. Besides, because the second key input unit 4 and the circuit board 29 are connected by the FPC 48, it is still possible to make key input on the second key input unit 4 even though the second key input unit 4 is stopped halfway.

Incidentally, while the locking projection 215 of each keylock body 21 does not engage in any of the first keylock engagement hole 43a, the second keylock engagement hole 43b or the clearance recess 44, the locking projection 215 touches the internal surface 41 of the second key input unit 4. In this state, the middle leg 213 deforms elastically and is pushed inwardly of the device body 1 by the internal surface 41.

As understood from this slide structure, the slidable range of the second key input unit 4 is determined by the travel range of the slidable guide projections 42 which slide in the guide slots 12 as well as by the interval between the first keylock engagement holes 43a and the second keylock engagement holes 43b in which the locking projections 215 of the keylock bodies 21 can engage.

Returning to Fig. 3, a flat area 17 in the device body 1 includes elongated slots 22, 22 which locate in the left part and the right part of the flat area 17 and which extends parallel to the slide directions X of the second key input unit 4. A pair of slider guides 23, 23 stand along the left and right edges of each elongated slot 22. The elongated slots 22 are open at the rear end wall 24 of the device body 1 (indicated at 22a). The openings 22a form outlets through which the sliders 31 project rearwardly from the device body 1.

Each slider 31 is a plate-like member which appears rectangular in plan view and which is shaped to fit into the elongated slot 22. The slider 31 is equipped with a stopper 32 at the center of its bottom surface (the top surface in Fig. 3). To the front and back of this stopper 32, there are screw holes 33, 33 for insertion of fastening screws 25.

The sliders 31 are fixed by the fastening screws 25 on the reverse surface 45 of the second key input unit 4. To be more specific, after the second key input unit 4 is attached to the device body 1 so as to cover the top surface of the first input unit 3, the sliders 31 are fitted into the elongated slots 22 from the reverse side of the device body 1. Thus fitted, the sliders 31 are fixed on the second key input unit 4 by 5 the fastening screws 25 which are inserted through the screw holes 33 and screwed into screw holes 49 in the second key input unit 4.

The thus fixed sliders 31 can slide in the elongated slots 22 along the respective pairs of slider guides 23, 23. Together with these sliders 31, the second key input unit 4 slides between the first position for covering the first input unit 3 (the position shown in Fig. 1) and the second position for entirely exposing the first input unit 3 (the position shown in Fig. 2).

In this respect, Fig. 5 to Fig. 8 show travel of the sliders 31 along with sliding movement of the second key input unit 4, as seen from the reverse side of the device body 1. Further, Fig. 9 and Fig. 10 show travel of the sliders 31 along with sliding movement of the second key input unit 4, as seen from the front side of the device body 1. For better intelligibility, the second key input unit 4 and the sliders 31 are separately illustrated in Fig. 9 and Fig. 10.

To start with, suppose that the second key input unit 4 rests at the first position for covering the first input unit 3. As shown in Fig. 7 and Fig. 9, the rear ends 31a of the sliders 31 locate at the outlets 22a formed at the open ends of the elongated slots 22, and remain in contact with the periphery of the outlets 22a. At this moment, lateral movement of the sliders 31 is limited by the pairs of slider guides 23, 23 which stand along the left and right edges of the elongated slots 22, and the rear ends 31a are in contact with the periphery of the outlets 22a. Therefore, the second key input unit 4 on which the sliders 31 are fixed does not shake laterally.

Secondly, suppose that the second key input unit 4 stays at the second position for entirely exposing the first input unit 3. As shown in Fig. 6, Fig. 8 and Fig. 10, the rear ends 31a of the sliders 31 project rearwardly from the outlets 22a formed at the open ends of the elongated slots 22.

In the situation where the sliders 31 project from the device body 1, the second key input unit 4 is attached to the device body 1 with a smaller area (namely, the area where the internal side surfaces 41 and bottom surface of the second key input unit 4 are attached to the side walls 11 and front surface of the device body 1 is reduced) . Nevertheless, the second key input unit 4 does not become shaky, owing to the engagement between the guide slots 12 and the slidable guide projections 42 as well as the engagement between the locking projections 215 of the keylock bodies 21 and the second keylock engagement holes 43b, as mentioned earlier.

In addition, referring to Fig. 8, when the second key input unit 4 reaches the second position for entirely exposing the first input unit 3, the stoppers 32 of the sliders 31 abut on the periphery of the outlets 22a which open at the rear end wall 24 of the device body 1 (see Fig. 7). The stoppers 32 prevent the sliders 31 from coming out of the elongated slots 22 any further.

Thus, the sliders 31 are stopped when the stoppers 32 abut on the periphery of the outlets 22a which open at the rear end wall 24 of the device body 1. This structure is also beneficial to simplify the manner of positioning the sliders 31 which are to be fixed on the reverse surface 45 of the second key input unit 4. Specifically speaking, the second key input unit 4 is slid to the second position, with the slidable guide projections 42 fitted in the guide slots 12 of the device body 1. Next, the sliders 31 fitted in the elongated slots 22 are slid until the stoppers 32 abut on the periphery of the outlets 22a of the device body 1. Thereby, the screw holes 33 in the sliders 31 are aligned with the screw holes 49 in the reverse surface 45 of the second key input unit 4. In this state, the fastening screws 25 are inserted and screwed through 5 the screw holes 33, so that the fastening screws 25 can enter the screw holes 49 without fail.

In summary, the electronic device according to the present invention has a characteristic slide structure which relies on the engagement between the guide slots 12 in the device body 1 and the slidable guide projections 42 in the second key input unit 4, the engagement between the locking projections 215 of the keylock bodies 21 in the device body 1 and the first or second keylock engagement holes 43a, 43b in the second key input unit 4, and the engagement between the elongated slots 22/the slider guides 23 in the device body 1 and the sliders 31 in the second key input unit 4. While the second key input unit 4 slides from the first position to the second position (or from the second position to the first position), this slide structure ensures a stable, backlash-free sliding movement at any position in its slidable range.

Additionally, although the present embodiment employs two elongated slots 22 and locates them in the left part and the right part of the flat area 17 in the device body 1, the number and position of elongated slots 22 should not be limited to this disclosure. For example, a single elongated slot may be formed in the center of the flat area 17. For a stable sliding movement, three or more elongated slots may be provided.

As for the FPC 48 which is drawn from the base circuit board 55 for key contacts held in the second key input unit 4, the FPC 48 is guided through a FPC insertion hole 28 formed in the device body 1 and is connected to a FPC connector 29a which is mounted on the circuit board 29.

The description proceeds further with reference to Fig. 12 and Fig. 13, which are sectional views of the PDA in which the second key input unit 4 is attached to the device body 1. The second key input unit 4 is closed in Fig. 12 and open in Fig. 13.

A key cabinet 51 constitutes the housing of the second key input unit 4. It contains, from top to bottom, a rubber key base 52, dome-like spring contacts 53, a circuit board 54 for key contacts, and a base circuit board 55 for key contacts. The second key input unit 4 is slidably attached to the device body 1 by the sliders 31 and the fastening screws 25, as already described.

The rubber key base 52 includes, as key tops, projections 52a for pressing the rubber key base 52. When any of the key tops (the projections for pressing the rubber key base) 52a is pressed down to push a corresponding spring contact 53, an individual signal is outputted to the circuit in the circuit board 29 disposed in the device body 1.

On the bottom surface of the rubber key base 52, there are a plurality of positioning ribs 56 for holding the rubber key base 52 in place and for keeping an even clearance from the circuit board 54 for key contacts. With these positioning ribs 56, the rubber key base 52 and the circuit board 54 for key contacts are spaced evenly.

Incidentally, the PDA of the above structure is greater in width than currently available mobile telephones. This is because the second key input unit 4 adopts a full alphabetic keyboard similar to a PC keyboard. Although reduction in size is desirable, any compact electronic device needs to increase its width in order to accommodate a full keyboard.

Taking the width of the product into consideration, this PDA is suitably operated in both hands, rather than in one hand. When making key input on this PDA, a user holds both sides of the second key input unit 4 in both hands and presses key tops on the full keyboard.

Such key input operations are illustrated in Fig. 14 and Fig. 15. In Fig. 14, a user is making key input, with the second key input unit 4 closed (at the first position) . In Fig. 15, the second key input unit 4 is moved from the closed state and opened completely (at the second position).

As illustrated, in the case where the PDA is held in both hands, key tops on the second key input unit 4 are pressed by thumbs. When the second key input unit 4 which covers the first input unit 3 (as shown in Fig. 14) is slid down to expose the first input unit 3 entirely (as shown in Fig. 15), the key tops are also displaced downwardly by the slide distance of the second key input unit 4. Accordingly, a user, who manipulates keys by thumbs, needs to shift the thumb position downwardly while holding the electronic device in both hands.

Concerning the shift of thumb positions necessitated by the sliding movement of the second key input unit 4, detailed description is made with reference to Fig. 16 and Fig. 17.

In the first example shown in Fig. 16, the second key input unit 4 (i.e. the key cabinet 51) has a horizontal top surface. Fig. 16(a) depicts a thumb position while the second key input unit 4 is closed, and Fig. 16 (b) depicts a thumb position after the second key input unit 4 is slid open.

While the second key input unit 4 overlaps the first input unit 3, as in the case of Fig. 16(a), the first joint of the thumb is bent at a natural angle (the angle a) in most occasions. By contrast, after the second key input unit 4 is slid in the direction of the arrow X1, as shown in Fig. 16(b), the first joint of the thumb should be raised in proportion to the slide distance. As a result, the first joint is likely to be bent at the angle b (∠a>∠b).

In the second example shown in Fig. 17, the cabinet 51 of the second key input unit 4 is inclined gently and slightly (i.e. the cabinet 51 has a gently curved surface). Fig. 17(a) depicts a thumb position while the second key input unit 4 is closed, and Fig. 17(b) depicts a thumb position after the second key input unit 4 is slid open.

In Fig. 17(a), the action of the thumb is hardly different from the state illustrated in Fig. 16(a). The first joint of the thumb is bent at the angle c (∠c≒∠a) to press down the key top 52a. In Fig. 17(b), the second key input unit 4 is slid in the direction of the arrow X1. Since the cabinet 51 has an inclined surface, a user can press the key top 52a by bending the first joint of the thumb less acutely than on the flat cabinet. In this case, the first joint of the thumb is bent at the angle d, which is greater than the angle b in Fig. 16(b) (∠d>∠b). Hence, this example assists the press down action by the thumb.

Solid dots P in Fig. 16 and Fig. 17 denote the center of the first joint of the thumb. The symbol A in Fig. 16(b) indicates the difference between he positions of the center P in Fig. 16(a) and Fig. 16(b). Likewise, the symbol B in Fig. 17(b) indicates the difference between the positions of the center P in Fig. 17(a) and Fig. 17(b).

In comparison, the difference B is smaller than the difference A. This means that the cabinet 51 with an inclined top surface reduces the up-down displacement of the first joint and thus reduces the displacement of the thumb. Consequently, a user can press down the key tops 52a in quick actions.

Fig. 18 is a schematic sectional view of the second key input unit 4 shown in Fig. 17. In this illustration, the second key input unit 4 is understood to open in the X1 direction by sliding movement. In addition to the inclined cabinet 51, this second key input unit 4 is equipped with key tops 52a whose top surfaces are inclined along the cabinet 51. However, a key contact part is flat.

As the components of the second key input unit 4, if both the cabinet 51 and key tops 52a have inclined surfaces, the resulting second key input unit 4 can assist key manipulation.

In the case of the cabinet 51 illustrated in Fig. 17 and Fig. 18, the whole part of its top surface is inclined to form a curve. Instead, the top surface of the cabinet 51 may be raised and curved only at the forward end (the left end in Fig. 18, which is the end nearer to the display unit 2), and the rest of the top surface may form a substantially flat slope which descends toward the rear end (the right end in Fig. 18).

The key contact part includes a film 57 as the FPC 48, and a conductive pattern 58 (the circuit board 54 for key contacts shown in Fig. 12) disposed on the film 57. Click feel and a return force of the keys are realized by spring contacts 53 which exhibit a spring-like property. The spring contacts 53 are made of a conductive metal and connected to the conductive pattern 58. Inside the spring contacts 53, conductive parts 59 are provided as contact points and electrically insulated from the conductive pattern 58.

On depression of any of the key tops 52a, a corresponding spring contact 53 is pushed down and touches a conductive part 59. At this moment, the key is activated by the electrical connection between the conductive pattern 58 and the conductive part 59 via the spring contact 53. The active electric signal is transmitted to the circuit in the circuit board 29 via a signal line (not shown) of the conductive pattern on the film 57.

Referring further to Fig. 18, it goes without saying that an input on the second key input unit 4 is made not only by pressing the leftmost key top 52a but also by pressing the rightmost key top 52a (i.e. one of the rearmost key tops 52a in the second key input unit 4). In the latter case, a user presses the rightmost (i.e. rearmost) key top 52a after adjusting the position of his hands which hold the PDA.

Fig. 19 is a plan view of the second key input unit 4.

At the center of the second key input unit 4, there is a full alphabetic keyboard similar to a PC keyboard. Above and below the full keyboard, various function keys are provided in rows.

The present embodiment categorizes the key tops 52a in the second key input unit 4 by their types and functions. For this purpose, the key tops 52a are designed in different shapes at the exterior portions. In the illustrated example, the key tops 52a include round alphabet keys, triangular cursor keys and the like.

For the same purpose, the cabinet 51 is also provided with grooves 60 (60a, 60b) for linking key tops 52a of the same groups.

In the example illustrated in Fig. 19, the alphabet keys "A" to "Z", the arrow keys (shift keys), and the enter key are categorized into the group G1. In this group, the key tops 52a are linked sideways by three rows of grooves 60a, 60a, 60a, and the three grooves 60a, 60a, 60a appear to be associated with each other.

The four cursor keys are categorized into the group G2 and linked by the groove 60b, so that the key tops 52a for the four cursor keys appear to be associated with each other.

Where the key tops 52a are categorized by means of the grooves 60 (60a, 60b), a user can grasp the relationship of the key tops 52a on looking at the keyboard. Hence, such categorization improves the operability.

Fig. 20 is a sectional view taken along the line I-II in Fig. 19, for showing the forms of the grooves 60 (60a, 60b). In this illustration, the upper two key tops 52a, 52a are the UP cursor key and the DOWN cursor key, whereas the lowest key top 52a is the alphabet key "T". The grooves 60 (60a, 60b) are made by grooving the cabinet 51 into the thickness direction.

As the means for distinguishing between the key top groups, grooves 60 are utilized in the present embodiment. On the contrary, the cabinet 51 may have ridges on the top surface. Further, instead of grooves or ridges, lines of different colors may be simply printed on the top surface of the cabinet 51.

As for the means for electrically connecting the second key input unit 4 and the circuit in the circuit board 29, the FPC 48 is employed in the present embodiment. On the other hand, it should be understood that such electrical connection can be provided by any other means. To give some examples, the second key input unit 4 and the circuit in the circuit board 29 may be electrically connected via infrared communication. As illustrated in Fig. 21, light emitting elements 65a are located in the end surface 4a at the open end of the second key input unit 4, whereas light receiving elements 65b are disposed in the end surface 1a of the device body 1 in an opposed manner. Similarly, the second key input unit 4 and the circuit in the circuit board 29 may be electrically connected via wireless communication between a wireless transmitter in the second key input unit 4 and a wireless receiver in the device body 1.

The invention may be embodied in other specific forms without departing from the spirit or essential characteristics thereof. The above embodiment is therefore to be considered in all respects as illustrative and not restrictive, the scope of the invention being indicated by the appended claims rather than by the foregoing description. All changes which come within the meaning and range of equivalency of the claims are therefore intended to be embraced therein.

This application is based on Patent Application No. 2002-065904 filed in Japan, the contents of which are incorporated hereinto by reference. Likewise, the contents of all references cited herein are incorporated hereinto by reference.

## Claims

1. An electronic device which comprises a device body having a first input unit, and a second input unit slidably attached to the device body and capable of covering and exposing the first input unit by sliding movement,
wherein the second input unit enables key input at any slide position which ranges from a first position for covering the first input unit to a second position for entirely exposing the first input unit.

2. An electronic device according to claim 1, wherein the second input unit is connected by wire to a circuit in a circuit board which is disposed on the device body.

3. An electronic device according to claim 1, wherein the second input unit is connected wirelessly to a circuit in a circuit board which is disposed on the device body.

4. An electronic device according to any of claims 1 to 3, wherein the second input unit is equipped with, as an exterior component, a cabinet which has an inclined top surface.

5. An electronic device according to any of claims 1 to 4, wherein the second input unit is a full keyboard which includes alphabet keys.

6. An electronic device according to any of claims 1 to 5, wherein the second input unit is equipped with key tops each of which has an inclined top surface.

7. An electronic device according to any of claims 1 to 6, wherein the second input unit is equipped with key tops which are shaped differently at exterior portions thereof and which are categorized into groups according to shapes.

8. An electronic device according to any of claims 4 to 7, wherein the second input unit is equipped with key tops which are categorized into groups, and the cabinet is provided with means for distinguishing each key top group from the other group or groups.

9. An electronic device according to claim 8, wherein the distinguishing means is a groove, a ridge or a printed mark for linking key tops of the same groups.

10. An electronic device according to claim 1, wherein
the device body is formed with an elongated guide slot which penetrates a top surface of the device body and which extends along a slide direction of the second input unit, the second input unit has a slider which is fixed on a bottom surface of the second input unit and allowed to slide in the elongated slot, and
the second input unit is arranged to be slidable between the first position and the second position, in cooperation with the slider which slides in the elongated slot.

11. An electronic device according to claim 10, wherein
the elongated slot is open at a rear end thereof and merges into an opening formed in a rear end wall of the device body, and
the slider is arranged to project rearwardly from the opening in the rear end wall when the second input unit slides to the second position.

12. An electronic device according to claim 11, wherein the slider has a stopper at the center of a bottom surface thereof, the stopper being brought into locking engagement with a periphery of the opening in the rear end wall when the second input unit slides to the second position.

13. An electronic device according to any of claims 1 and 10 to 12, wherein
the device body is arranged to have a pair of outward projections, one each on a pair of external surfaces of the device body which are opposed to each other in a direction orthogonal to the slide direction of the second input unit,
the second input unit is provided with a pair of first engagement recesses and a pair of second engagement recesses, one each in a pair of internal surfaces of the second input unit which are opposed to each other in a direction orthogonal to the slide direction of the second input unit, the first and second engagement recesses in each internal surface being spaced along the slide direction at a predetermined interval,
with the second input unit locating at the first position for covering the first input unit, the pair of projections engage in the pair of first engagement recesses, and
with the second input unit locating at the second position for entirely exposing the first input unit, the pair of projections engage in the pair of second engagement recesses.

14. An electronic device according to claim 13, wherein
the device body is provided with a pair of openings, one each through a pair of side walls of the device body which are opposed to each other in a direction orthogonal to the slide direction,
the device body accommodates a pair of keylock bodies, one each along internal surfaces of the pair of side walls, each of the keylock bodies having a locking projection which protrudes outwardly from one of the openings, and
with locking projections of the pair of keylock bodies abutting on the internal surfaces of the second input unit except for the first and second engagement recesses, the keylock bodies deform elastically in such a manner that the locking projections are pushed into the device body by the internal surfaces.

15. An electronic device according to claim 13 or 14, wherein the second input unit is provided with a pair of clearance recesses between the first and second engagement recesses, the clearance recesses preventing the locking projections from touching the internal surfaces of the second input unit.
